# EUROPÄISCHE PATENTSCHRIFT

(11) **EP 2 874 923 B1**
(45) Veröffentlichungstag und Bekanntmachung des Hinweises auf die Patenterteilung: **19.04.2017**
(21) Anmeldenummer: 13736911.2
(22) Anmeldetag: 12.07.2013
(51) Int. Cl.: B65G 39/12, B65G 13/10, B65G 47/244, B65G 47/26, B65G 47/54

(54) **OMNIDIREKTIONALES FÖRDERSYSTEMMODUL, MODULARES OMNIDIREKTIONALES FÖRDERSYSTEM UND OMNIDIREKTIONALES FÖRDERSYSTEM**
OMNIDIRECTIONAL CONVEYING SYSTEM MODULE, MODULAR OMNIDIRECTIONAL CONVEYING SYSTEM, AND OMNIDIRECTIONAL CONVEYING SYSTEM
MODULE DE SYSTÈME TRANSPORTEUR OMNIDIRECTIONNEL, SYSTÈME TRANSPORTEUR OMNIDIRECTIONNEL MODULAIRE ET SYSTÈME TRANSPORTEUR OMNIDIRECTIONNEL

(30) Priorität: 18.07.2012 DE 102012014181
(43) Veröffentlichungstag der Anmeldung: 27.05.2015
(73) Patentinhaber: BIBA Bremer Institut für Produktion und Logistik GmbH, 28359 Bremen (DE)
(72) Erfinder: URIARTE, Claudio, 28205 Bremen (DE); KUNASCHK, Stefan, 28357 Bremen (DE)
(74) Vertreter: Manasse, Uwe
(86) Internationale Anmeldenummer: PCT/EP2013/064826
(87) Internationale Veröffentlichungsnummer: WO 2014/012861

(56) Entgegenhaltungen:
- EP-A2- 0 563 824
- DE-A1-102010 044 239
- GB-A- 1 290 242
- US-A- 3 645 379
- US-A- 5 396 977
- US-A- 5 556 246

## Beschreibung

Die vorliegende Erfindung betrifft ein omnidirektionales Fördersystemmodul, modulare omnidirektionale Fördersysteme und omnidirektionale Fördersysteme.

Omnidirektionale Fördersysteme sind grundsätzlich bekannt. Sie werden benutzt, wenn Objekte gleichzeitig bewegt und rotiert werden müssen bzw. wenn die Richtung der Objekte während der Bewegung geändert werden muss. So können die Objekte, wie zum Beispiel Paketstücke, in unterschiedlichen Richtungen transportiert und um die Mittelachse des Fördersystems rotiert werden. Es gibt unterschiedliche Fördersysteme, die in mehreren Richtungen fördern können. Darunter gibt es Fördersysteme mit Allseitenrädern. Ein derartiges System ist beispielsweise in dem US-Patent 5,396,977 beschrieben. Das bekannte Fördersystem weist mehrere parallele transversale und longitudinale Wellen auf, auf denen mehrere Allseitenräder in Abständen zueinander befestigt sind. Jede der Wellen wird von einem jeweiligen Antriebsmotor angetrieben. Zudem sind die Wellen in geeignete Zonen und Unterzonen unterteilt, um für eine longitudinale, transversale und Drehbewegung in zwei Zonen des Fördersystems zu sorgen. Mittels des Fördersystems können jedoch Objekte, wie zum Beispiel Pakete, nicht gezielt in jeder Richtung in zwei Dimensionen (2D) unabhängig voneinander gefördert werden.

Das Dokument US 5,556,246 A offenbart ein Omnidirektionales Fördersystemmodul nach dem Oberbegriff des Anspruchs 1. Der Erfindung liegt somit die Aufgabe zugrunde, ein gezieltes Fördern von Objekten, wie zum Beispiel Paketen, in jeder Richtung in 2D unabhängig voneinander zu ermöglichen.

Erfindungsgemäß wird diese Aufgabe gelöst durch ein omnidirektionales Fördersystemmodul nach Anspruch 1. Es handelt sich dabei um ein sogenanntes kraftgetriebenes oder aktives omnidirektionales Fördersystemmodul. Das Förderrad kann auch als Förderrolle bezeichnet werden. Weiterhin ist darauf hinzuweisen, dass je nach Förderradtyp die Wirkrichtung orthogonal zur Hauptdrehachse des Förderrades, aber auch unter einem anderen Winkel verlaufen kann.

Weiterhin liefert die vorliegende Erfindung modulare omnidirektionale Fördersysteme gemäß einem der Ansprüche 12 bis 16. Darüber hinaus liefert die vorliegende Erfindung omnidirektionale Fördersysteme gemäß den Ansprüchen 17 bis 23. Dabei können die Fördereinheiten zum Beispiel auf einem Trägerblech montiert sein, das eine gewünschte Form aufweist. In diesem Fall wäre eine Modularität nicht notwendig. Sowohl die modularen omnidirektionalen Fördersysteme als auch die omnidirektionalen Fördersysteme können eine durch die Förderräder definierte Förderfläche mit beliebiger Gestalt, wie zum Beispiel eben, aber auch zum Beispiel gekrümmt, aufweisen.

Gemäß einer besonderen Ausführungsform des Fördersystemmoduls sind genau zwei omnidirektionale Fördereinheiten nebeneinander vorgesehen. Dadurch wird ein gezieltes Fördern in jeder Richtung in 2D unabhängig voneinander ermöglicht. Genauer gesagt wird dadurch ein gleichzeitiges Fördern von Objekten, wie zum Beispiel Paketen, mit individuellen Bahnen ermöglicht. Wenn die Wirkrichtungen der beiden Förderachsen parallel verlaufen würden, wäre keine 2D-Bewegung, sondern nur eine Förderung in lediglich einer Richtung möglich.

Gemäß einer alternativen Ausführungsform können genau drei omnidirektionale Fördereinheiten nebeneinander vorgesehen und die Wirkrichtungen der Förderräder der drei Fördereinheiten so zueinander verlaufen, dass keine parallelen Wirkrichtungen vorliegen. Auf diese Weise wird ein gezieltes Fördern von Objekten in jeder Richtung in 2D unabhängig voneinander sowie zusätzlich eine Rotation ermöglicht. Selbstverständlich können aber auch mehr als drei, wie zum Beispiel vier oder fünf omnidirektionale Fördereinheiten vorgesehen sein.

Bevorzugt verlaufen die Wirkrichtungen der Förderräder nicht orthogonal zueinander.

Günstigerweise sind die Förderräder in den Seitenmitten eines gleichseitigen Dreiecks angeordnet. Die Entfernungen der Förderräder vom Mittelpunkt und deren Winkel zueinander können aber auch unterschiedlich sein.

Insbesondere kann dabei vorgesehen sein, dass die Wirkrichtungen der Förderräder unter einem Winkel von 0° zu den Seiten des Dreiecks verlaufen oder mindestens eine der Wirkrichtungen der Förderräder unter einem Winkel ungleich 0° zur zugehörigen Seite des Dreiecks verläuft. Die erstgenannte Alternative vereinfacht die Mathematik hinter der Steuerung/Ansteuerung. Alternativ oder zusätzlich können die Entfernungen der Förderräder vom Mittelpunkt unterschiedlich sein.

Weiterhin kann vorgesehen sein, dass jedes omnidirektionale Förderrad aus einem Einzel-Allseitenrad oder einem Mehrfach-Allseitenrad, insbesondere Doppel-Allseitenrad, besteht. Ein Beispiel für Allseitenräder stellen die von der Firma Interroll hergestellten Omniwheel™ dar. Bei beispielsweise Doppel-Allseitenrädern befinden sich zwei Allseitenräder auf derselben Antriebswelle. Die Anzahl der Allseitenräder je Fördereinheit kann davon abhängen, wie das Allseitenrad gestaltet ist. Es kann ein Einzel-Allseitenrad ausreichen, insbesondere wenn es eine ausreichende Anzahl von Rollen aufweist, so dass sich ein omnidirektionales Profil, d.h. ein zumindest im Wesentlichen kreisbogenförmiges Profil des gesamten Allseitenrades ergibt. Selbst wenn zwischen den Rollen des Einzel-Allseitenrades eine Lücke vorhanden ist, kann es ausreichen. Ein Objekt, wie zum Beispiel ein Paket, wird dann aber nicht ruckelfrei gefördert werden. Zur genauen Positionierung wäre dann wahrscheinlich eine Positionsüberwachung zum Beispiel mittels Bildverarbeitung notwendig. Vorteilhafterweise sind die Rollen der Allseitenräder kreisbogenförmig gestaltet, um ein vorzugsweise kreisbogenförmiges Profil des gesamten Allseitenrades zu erzielen. Zylindrische Rollen können aber auch ausreichen.

Insbesondere kann vorgesehen sein, dass das Allseitenrad ein Mecanum-Rad ist.

In einer bevorzugten Ausführungsform umfasst das Fördersystemmodul ein Trägerblech, an dessen Unterseite die omnidirektionale(n) Fördereinheit(en) so gelagert ist/sind, dass das Förderrad bzw. die Förderräder durch einen bzw. einen jeweiligen Ausschnitt im Trägerblech nach oben vorragt/vorragen. Bei dem Ausschnitt kann es sich beispielsweise um eine Aussparung oder um ein Loch handeln. Die Fördereinheiten können aber statt an einem Trägerblech auch anderweitig, zum Beispiel an sich vertikal erstreckenden Profilen, befestigt sein.

Zweckmäßigerweise umfasst das Fördersystemmodul mindestens eine in dem Trägerblech gelagerte Kugelrolle und vorzugsweise mehrere vorzugsweise gleichmäßig verteilte derartige Kugelrollen.

Zweckmäßigerweise ist das Fördersystemmodul steckbar.

Gemäß einer besonderen Ausführungsform der Erfindung ist mindestens eines der Förderräder einzeln federnd gelagert.

Weiterhin ist denkbar, dass mindestens eine der Fördereinheiten einzeln federnd gelagert ist.

Ferner kann vorgesehen sein, dass die zwei Fördereinheiten oder mindestens zwei der Fördereinheiten abhängig voneinander federnd gelagert sind.

Bei den modularen omnidirektionalen Fördersystemen gemäß einem der Ansprüche 12 bis 16 verlaufen vorteilhafterweise die Wirkrichtungen der Förderräder der Zweier- oder Dreiergruppen nicht orthogonal zueinander vorteilhafterweise. Insbesondere kann dabei vorgesehen sein, dass das mindestens eine passive Fördersystemmodul mindestens eine Kugelrolle aufweist. Anstelle der Kugelrolle könnte aber auch irgendein passiv gelagertes omnidirektionales Element verwendet werden.

Bei den omnidirektionalen Fördersystemen gemäß den Ansprüchen 17 und 18 verlaufen die der Förderräder vorteilhafterweise nicht orthogonal zueinander. Vorzugsweise ist mindestens eines der Förderräder einzeln federnd gelagert.

Auch ist denkbar, dass mindestens eine der Fördereinheiten einzeln federnd gelagert ist. Vorteilhafterweise sind die zwei Fördereinheiten oder mindestens zwei der Fördereinheiten abhängig voneinander federnd gelagert.

Schließlich kann vorgesehen sein, dass mindestens zwei der Fördersystemmodule miteinander federnd verbunden sind.

Der Erfindung liegt die überraschende Erkenntnis zugrunde, dass durch die separate Antreib- und Ansteuerbarkeit der omnidirektionalen Fördereinheiten Objekte, wie zum Beispiel Pakete, gezielt in jeder Richtung in 2D und 3D (Transaktion in Längs- und Querrichtung sowie Rotation) unabhängig voneinander gefördert werden können. Mit anderen Worten lassen sich Objekte, wie zum Beispiel Pakete, gleichzeitig mit individuellen Bahnen fördern. Wenn mindestens drei bzw. genau drei omnidirektionale Fördereinheiten vorgesehen sind, ist zusätzlich auch noch eine Rotation der Objekte möglich, und zwar nicht nur um ganz bestimmte ortsfeste Punkte, sondern - technisch gesehen - an beliebigen Stellen oder zumindest nahezu an beliebigen Stellen. Zudem kann durch geeignete Ausrichtung von direkt benachbarten Förderrädern zueinander die Hauptförderrichtung beeinflusst, eine effizientere Kraftübertragung bewirkt und eine optimale Verteilung der Kräfte an die jeweilige Anwendung realisiert werden.

Jeder Antriebsmotor kann ein beliebiges Geschwindigkeitsprofil fahren.

Durch die separate Antreib- und Ansteuerbarkeit wird ein gezielter Antrieb und eine Energieeinsparung möglich. Dies ergibt sich daraus, dass pro Objekt (z. B. Paket) eine Bahn berechenbar ist und danach nur diejenigen Antriebsmotoren eingeschaltet werden, die zum Abfahren der Bahn erforderlich sind.

Zumindest besondere Ausführungsformen der Erfindung bieten folgende (weitere) Vorteile:
- Durch die modulare Bauweise kann die Förderfläche/Arbeitsfläche beliebig erweitert werden.
- Aufgrund der einfachen Anordnung der Förderelemente/Rollelemente ist das resultierende Fördersystem kostengünstiger als herkömmliche omnidirektionale Positionier- bzw. Fördersysteme.
- Bewegungen sind in allen Richtungen möglich. Diese können Geraden, Kurven oder Rotationen oder eine beliebige Kombination derselben sein.
- Durch die Einzelsteuerung der Antriebsmotoren können mehrere Objekte (zum Beispiel Paketstücke) gleichzeitig bewegt werden. Die Bewegung kann in beliebigen Bahnen und Rotationen erfolgen.
- Sehr kleines Footprint verglichen mit Lagenvorbereitungsanlagen (Roboter oder Schieber).
- Energieeinsparung durch gezieltes Ein- und Ausschalten von Motoren.

Grundsätzlich kann die Erfindung überall dort eingesetzt werden, wo Objekte auf einer Ebene frei positioniert werden müssen. Insbesondere kann sie in intralogistischen Anwendungen, wie zum Beispiel
- Erstellung von Paketlagen für Palettierautomaten,
- Vereinzeln von Paketströmen (Singulieren)
- Aus- und Einschleusen von Paketen in vorhandene Fördertechnik,
- Sortierung von Paketen und
- Rotieren von Paketen
eingesetzt werden.

Eine nicht-orthogonale Anordnung hat gegenüber einer orthogonalen Anordnung in einem omnidirektionalen Fördersystemmodul beziehungsweise Fördersystem folgende Vorteile:
Über die omnidirektionalen Förderräder werden Kräfte in die Rotationsrichtung auf ein zu bewegendes Objekt übertragen. In allen anderen Richtungen werden die Kräfte von den frei rotierenden Rollen, wie zum Beispiel Hilfsräder, aufgenommen und nicht auf das Objekt übertragen. Durch die Anordnung der omnidirektionalen Förderräder können die Eigenschaften des Fördersystemmoduls beziehungsweise Fördersystems beeinflusst werden. Unter anderem kann die Verteilung der übertragbaren Kräfte geändert werden, welche als ein Vektor mit Richtung und Größe dargestellt werden können. Die Richtung, die den Vektor mit der größten Amplitude aufweist, wird als Hauptförderrichtung bezeichnet. So können je nach Anordnung der Förderräder beziehungsweise Fördereinheiten Fördersystemmodule beziehungsweise Fördersysteme zum Fördern oder zum Positionieren von Objekten konstruiert werden. Wenn zum Beispiel drei Fördereinheiten in einer nicht-orthogonalen Anordnung, wobei die Fördereinheiten unter einem Winkel von 120° zueinander stehen, vorliegen, so lässt sich damit eine gleichmäßigere Verteilung der übertragbaren Kräfte erzielen, sodass Objekte sehr effektiv in alle Richtungen bewegt werden können. Eine derartige Anordnung eignet sich sehr gut für Aufgaben, bei denen Objekte in allen Richtung bewegt oder gedreht werden müssen (Positionierung). Als Beispiel für eine solche Aufgabe sei auf Palettieranlagen verwiesen, bei denen Paketlagen für die automatische Palettierung erstellt werden.

Bei einer beispielhaften nicht-orthogonalen Anordnung von drei Förderrädern beziehungsweise Fördereinheiten mit 60°-90°-120° Orientierungen zeigt die Verteilung der übertragbaren Kräfte eine ausgeprägte Hauptförderrichtung, welche in die 90°-Richtung zeigt. Im Bereich -30°-+30° ist die Kraftübertragung sehr schlecht, sodass eine Bewegung quer zur Hauptförderrichtung sehr ineffizient, aber dennoch möglich ist. Eine derartige Anordnung eignet sich sehr gut für Förderaufgaben, bei denen ein Objekt hauptsächlich in einer Richtung bewegt wird, ohne diese großartig ändern zu müssen. Als Beispiel einer solchen Anwendung dient eine Förderstrecke mit Ausschleusung. Hier werden die Objekte in einer 90°-Richtung bewegt und zu abzweigenden Förderelementen hingelenkt.

Generell ist mit einer Anordnung aus drei Antrieben eine viel größere Momentübertragung auf ein Objekt möglich.

Durch eine beliebige Einstellung der Anordnung der Förderräder beziehungsweise Fördereinheiten kann die Kraftverteilung optimal an die jeweilige Anwendung angepasst werden. Dadurch lässt sich Energie sparen. Schließlich lässt sich durch eine nicht-orthogonale Anordnung von drei oder mehr Förderrädern beziehungsweise Fördereinheiten eine symmetrische Kraftverteilung realisieren.

Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erläutert werden. Dabei zeigt/zeigen:
- Fig. 1: eine Draufsicht auf ein omnidirektionales Fördersystemmodul gemäß einer besonderen Ausführungsform der Erfindung von oben;
- Fig. 2: eine Draufsicht auf ein omnidirektionales Fördersystemmodul gemäß einer weiteren besonderen Ausführungsform der vorliegenden Erfindung von oben;
- Fig. 3: eine perspektivische Ansicht von dem Fördersystemmodul von Figur 2 schräg von oben;
- Fig. 4: eine Seitenansicht von dem Fördersystemmodul von Figur 2;
- Fig. 5a - 5d: verschiedene Ansichten von dem Fördersystemmodul von Figur 2 ohne Trägerblech;
- Fig. 6: eine perspektivische Ansicht von dem Fördersystemmodul von Figur 1 schräg von oben;
- Fig. 7: eine Seitenansicht von dem Fördersystemmodul von Figur 1;
- Fig. 8: eine Draufsicht auf ein omnidirektionales Fördersystemmodul gemäß einer weiteren besonderen Ausführungsform der Erfindung von oben;
- Fig. 9: eine perspektivische Ansicht von dem Fördersystemmodul von Figur 8 schräg von oben;
- Fig. 10: eine Seitenansicht von dem Fördersystemmodul von Figur 8;
- Fig. 11: die Anordnung und Orientierung der Förderräder bei dem Fördersystemmodul von Figur 1;
- Fig. 12a und 12b: ein omnidirektionales Fördersystemmodul gemäß einer weiteren besonderen Ausführungsform der Erfindung in Draufsicht von oben sowie die zugehörige Anordnung und Orientierung der Förderräder;
- Fig. 13a bis 13d: verschiedene Ansichten von einem omnidirektionalen Fördersystemmodul für ein Fördersystem gemäß einer weiteren besonderen Ausführungsform der Erfindung;
- Fig. 14a bis 14d: Draufsichten von dem Fördersystemmodul von Figur 1 mit unterschiedlichen Geschwindigkeitsvektoren der Antriebsmotoren und den jeweils resultierenden Bewegungen eines Objekts (Förderguts (Pakets));
- Fig. 15: eine perspektivische Ansicht von einem modularen omnidirektionalen Fördersystem gemäß einer weiteren besonderen Ausführungsform der Erfindung, das auf einem Tischgestell montiert ist, mit Paketen;
- Fig. 16: das Fördersystem von Figur 15 in einer anderen Förderphase;
- Fig. 17: eine Draufsicht auf das in Figur 15 gezeigte Fördersystem mit Förderrichtung spfeilen;
- Fig. 18: das Fördersystem von Figur 15 mit (anderen) Förderrichtungspfeilen;
- Fig. 19a und 19b: ausschnittweise Ansichten von dem Fördersystem von Figur 15 von oben und von unten;
- Fig. 20: schematisch eine Seitenansicht von einem Fördersystem gemäß einer besonderen Ausführungsform der Erfindung;
- Fig. 21: schematisch eine Seitenansicht von einem Fördersystem gemäß einer besonderen Ausführungsform der Erfindung mit Federung der Förderräder;
- Fig. 22: eine Schnittansicht (oben) entlang der Linie A-A von einem Fördersystemmodul mit Federung der Fördereinheiten unabhängig voneinander von einem und eine Draufsicht von oben auf ein Fördersystem gemäß einer besonderen Ausführungsform der Erfindung;
- Fig. 23: eine Schnittansicht (oben) entlang der Linie A-A von einem Fördersystemmodul mit Federung der Fördereinheiten unabhängig voneinander von einem und eine Draufsicht von oben auf ein Fördersystemmodul gemäß einer besonderen Ausführungsform der Erfindung; und
- Fig. 24: eine Schnittansicht (oben) entlang der Linie A-A von einem Fördersystemmodul mit Federung der Fördersystemmodule zueinander von einem und eine Draufsicht von oben auf ein Fördersystemmodul gemäß einer besonderen Ausführungsform der Erfindung;

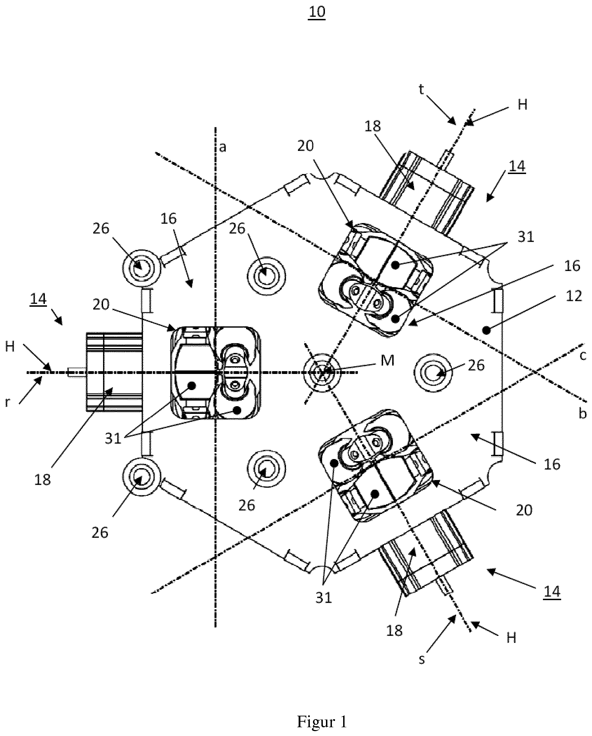

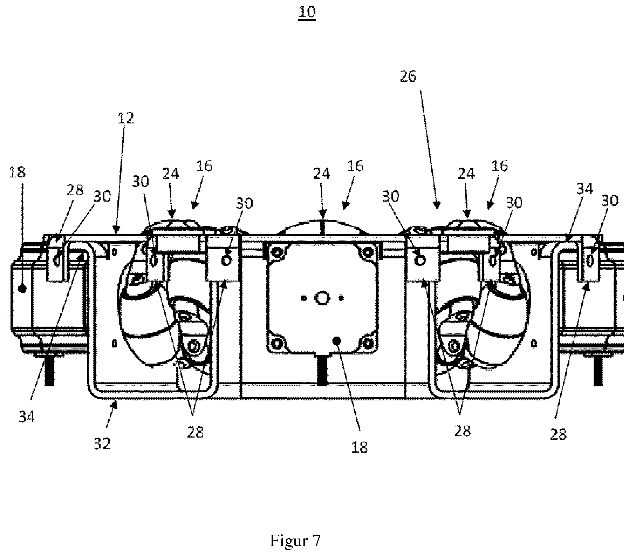

In den Figuren 1, 6 und 7 ist ein omnidirektionales Fördersystemmodul 10 gezeigt. Es umfasst ein sechseckiges Trägerblech 12 und drei omnidirektionale Fördereinheiten 14. Jede der drei Fördereinheiten 14 umfasst ein omnidirektionales Förderrad 16 und einen einzeln zugeordneten Antriebsmotor 18 zum individuellen Antreiben des jeweiligen Förderrades 16. Das Trägerblech 12 weist drei im wesentlichen quadratische Ausschnitte 20 auf und die Fördereinheiten 14 sind an der Unterseite 22 des Trägerbleches 12 so befestigt bzw. gelagert, dass die Förderräder 16 durch die Ausschnitte 20 im Trägerblech 12 nach oben vorragen. Wie sich insbesondere anhand der Figur 7 ergibt, liegen die höchsten Punkte 24 der Förderräder 16 in einer, vorzugsweise horizontalen, Ebene. Anhand der Figur 1 ergibt sich ferner, dass die Ausschnitte 20 und damit auch die Förderräder 16 in den Seitenmitten eines gleichseitigen Dreiecks D angeordnet sind. Die Fördereinheiten 14 sind also um einen Winkel γ = 120° sternförmig zueinander angeordnet. Die Hauptdrehachsen H der Förderräder 16 verlaufen unter einem Winkel β = 90° zu den Seiten a, b und c des Dreiecks D. Mit anderen Worten verlaufen die Hauptdrehachsen H kollinear mit den Mittelsenkrechten r, s und t. Dies bedeutet wiederum, dass die Antriebsmotoren 18 so angeordnet sind, dass sich die Verlängerungen der Antriebsmotorwellen (nicht gezeigt) im Mittelpunkt M des Fördersystemmoduls 10 treffen.

In den Lücken zwischen den Förderrädern 16 sind Kugelrollen 26 in der Höhe der Förderräder 16 auf bzw. in dem Trägerblech 12 angeordnet. Diese passiven Kugelrollen stützen von unten Objekte (nicht gezeigt), wie zum Beispiel Pakete, die auf den Förderrädern 16 aufliegen, und verhindern, dass diese sich bei der Bewegung an den Kanten des Fördersystemmoduls einhaken.

Das Trägerblech 12 weist seitliche, nach unten verlaufende Abkantungen (Laschen) 28 mit Bohrungen 30 zum Verschrauben mit benachbarten Fördersystemmodulen zur Bildung eines Fördersystems bzw. einer Plattform auf.

In dem hier dargestellten Ausführungsbeispiel besteht jedes der Förderräder 16 aus einem Doppel-Allseitenrad. In bekannter Weise sind bei jedem Allseitenrad des Doppel-Allseitenrades auf der Umlauffläche drei tonnenförmige (ballige) Hilfsräder (Rollen 31, von denen nur einige gekennzeichnet sind) äquidistant angebracht, deren Drehachsen im rechten Winkel zur Drehachse (Hauptdrehachse H) des Hauptrades liegen und die nahezu breitförmiges Profil bauen. Das andere Allseitenrad des Doppel-Allseitenrades ist genauso gestaltet, außer dass die Hilfsräder (Rollen) um 60° zu den Rollen des benachbarten Allseitenrades versetzt sind. Die omnidirektionalen Förderräder 16 können aber auch anders gestaltet sein.

Bei Omniwheels™ stehen die Rotationsachsen der Rollen in einem Winkel von 90° zur Hauptdrehachse und parallel zur Hauptdrehrichtung. Somit werden Kräfte in Rotationsrichtung übertragen. Die restlichen Kräfte werden von den Rollen aufgenommen. Das heißt, dass die Wirkrichtung des Rades dieselbe wie die Rotationsrichtung des Rades ist. Bei Mecanum-Rädern sind dagegen die Rollen nicht unter einem Winkel von 90° zur Hauptdrehrichtung angebracht, sondern (üblicherweise) unter einem Winkel von 45°. Somit ist die Wirkrichtung des Rades ungleich der Hauptdrehrichtung.

Jede der Fördereinheiten 14 ist in bzw. an einem im wesentlichen C-förmigen, nach oben offenen Träger 32 mit oben beiderseits nach außen gewandten Abkantungen 34 mit Bohrungen angebracht, der an der Unterseite 20 des Trägerbleches 12 mittels Schrauben (nicht gezeigt) befestigt ist. Die Befestigung kann aber auch anders erfolgen.

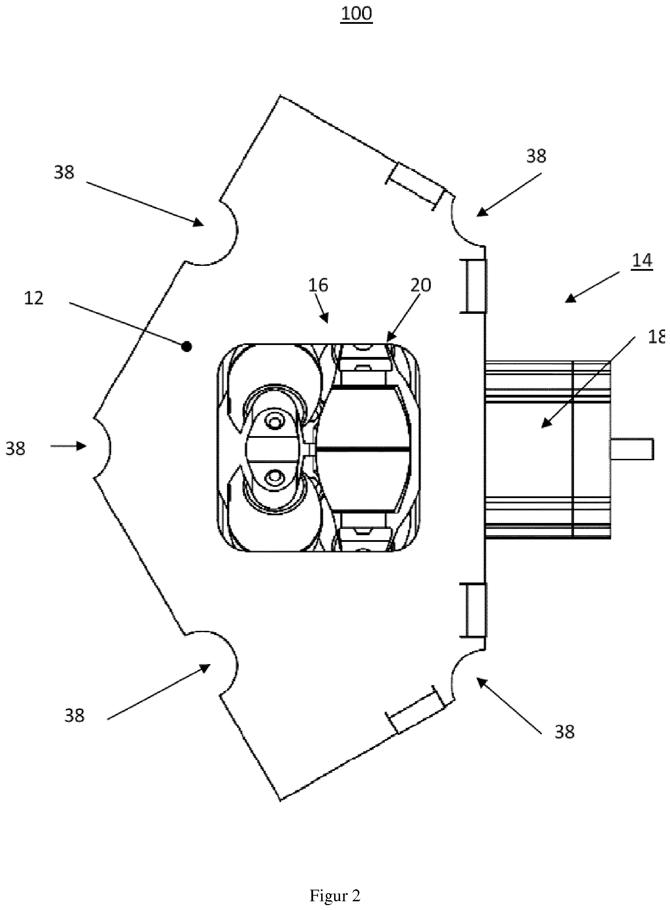

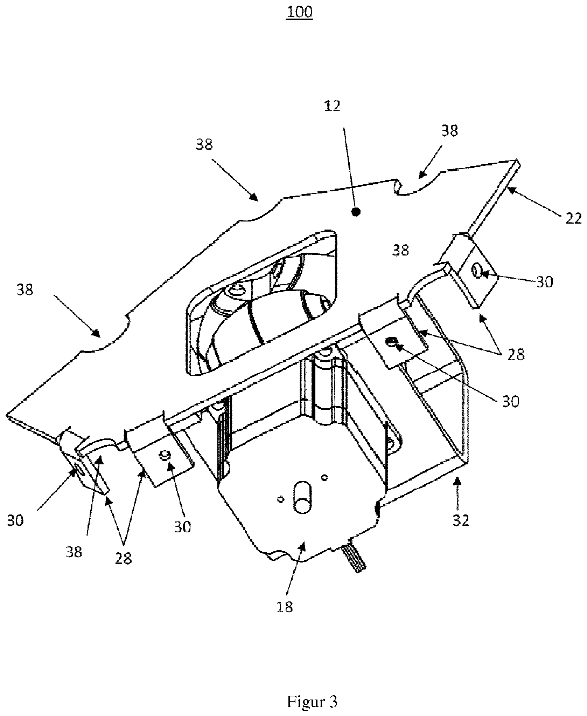

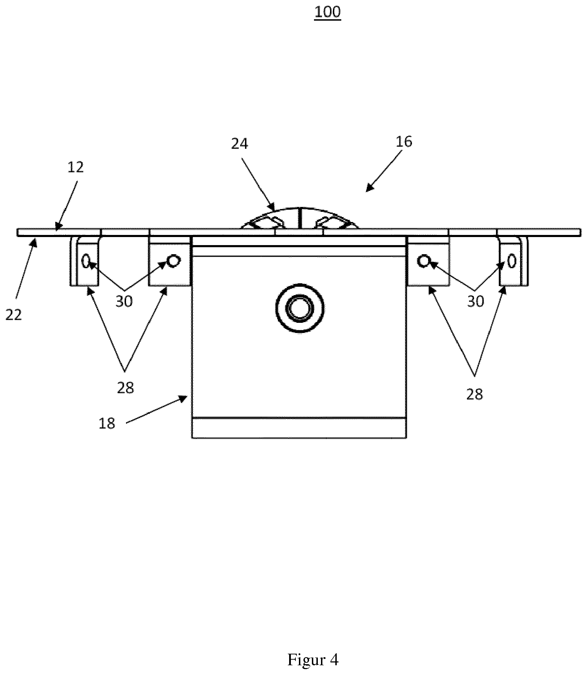

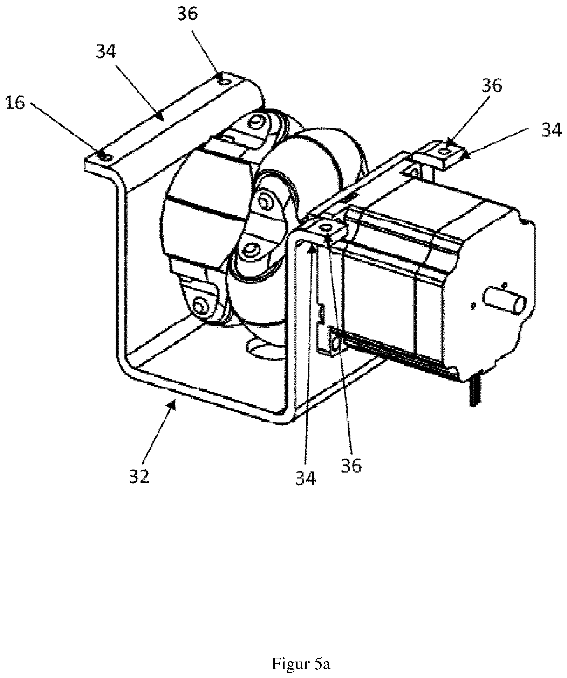

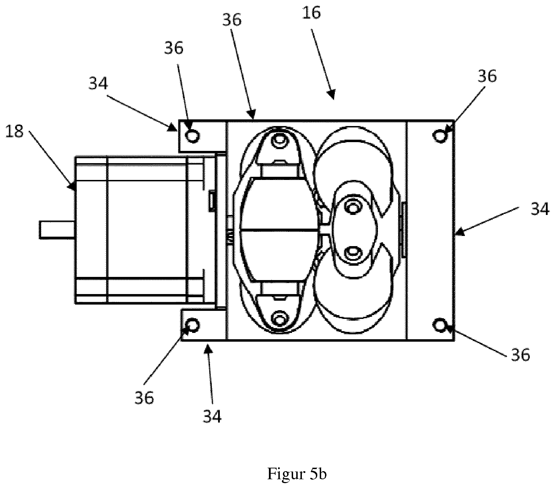

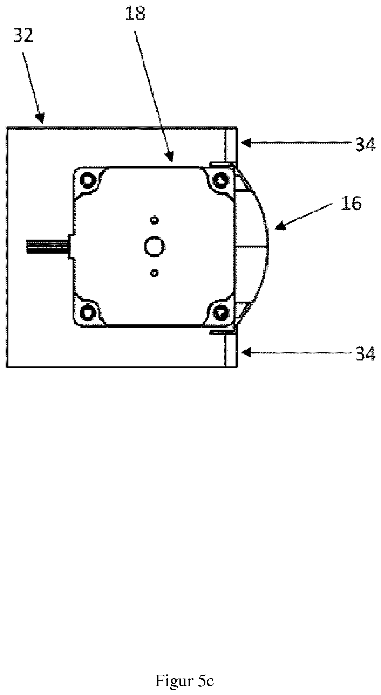

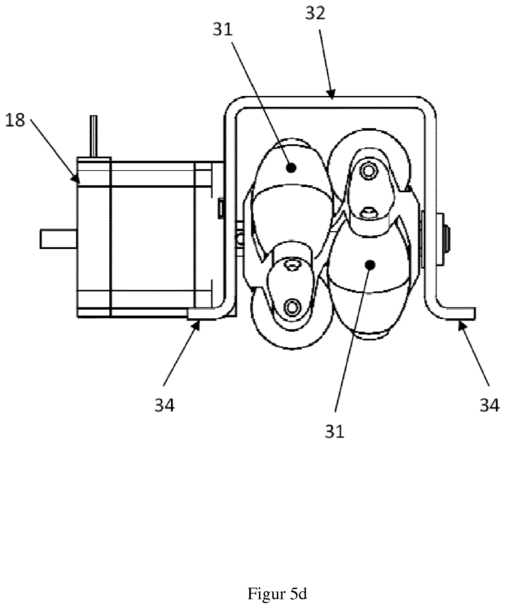

Die Figuren 2 bis 4 zeigen eine besondere Ausführungsform einer Fördereinheit 14 mit Trägerblech 12 für ein Fördersystemmodul und die Figuren 5a bis 5d zeigen dieselbe Fördereinheit 14 ohne Trägerblech. Das in den Figuren 1, 6 und 7 gezeigte Fördersystemmodul 10 könnte zum Beispiel aus drei Fördereinheiten 14 mit Trägerblech 12 zusammengesetzt sein. Sie bildet sozusagen die kleinste Einheit.

Die omnidirektionale Fördereinheit 14 umfasst genau wie die in den Figuren 1, 6 und 7 gezeigte Ausführungsform ein omnidirektionales Förderrad 16 und einen einzeln zugeordneten Antriebsmotor 18 zum individuellen Antreiben des Förderrades 16. Des Weiteren umfasst sie ein im Wesentlichen fünfeckiges Trägerblech 12 mit einem im Wesentlichen quadratischen Ausschnitt 20 auf. Die Fördereinheit 14 ist an der Unterseite 22 des Trägerbleches 12 so befestigt bzw. gelagert, dass das Förderrad 16 durch den Ausschnitt 20 im Trägerblech 12 nach oben vorragt.

An den Rändern des Trägerbleches 12 sind im Wesentlichen halbkreisförmige Aussparungen 38 zur Aufnahme von Kugelrollen (nicht gezeigt) ausgebildet. Je nach Position des Trägerbleches können sie aber zum Beispiel auch ½, ⅓, oder ¼ eines Kreises sein.

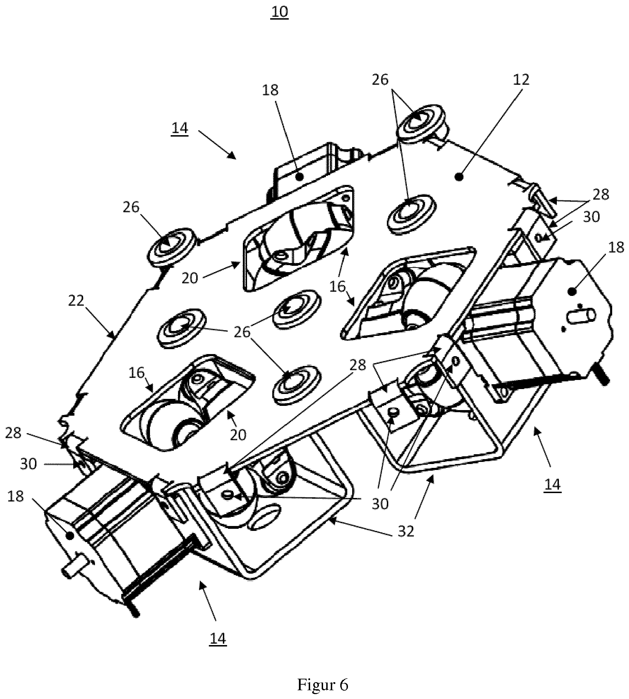

Ferner weist das Trägerblech 12 seitliche, nach unten verlaufende Abkantungen (Laschen) 28 (siehe Figur 6) mit Bohrungen 30 zum Verschrauben mit benachbarten Fördersystemmodulen zur Bildung des Fördersystemmoduls 10 gemäß Figur 1 bzw. zur Bildung eines Fördersystems bzw. einer Plattform auf.

Genau wie in dem in den Figuren 1, 6 und 7 dargestellten Ausführungsbeispiel besteht das Förderrad 16 aus einem Doppel-Allseitenrad.

Die Fördereinheit 14 ist in bzw. an einem im Wesentlichen C-förmigen, nach oben offenen Träger 32 mit oberen beiderseits nach außen gewandten Abkantungen 34 Bohrungen 36 angebracht, der an der Unterseite 20 des Trägerbleches 12 mittels Schrauben (nicht gezeigt) befestigt ist. Die Befestigung könnte aber auch anders realisiert sein.

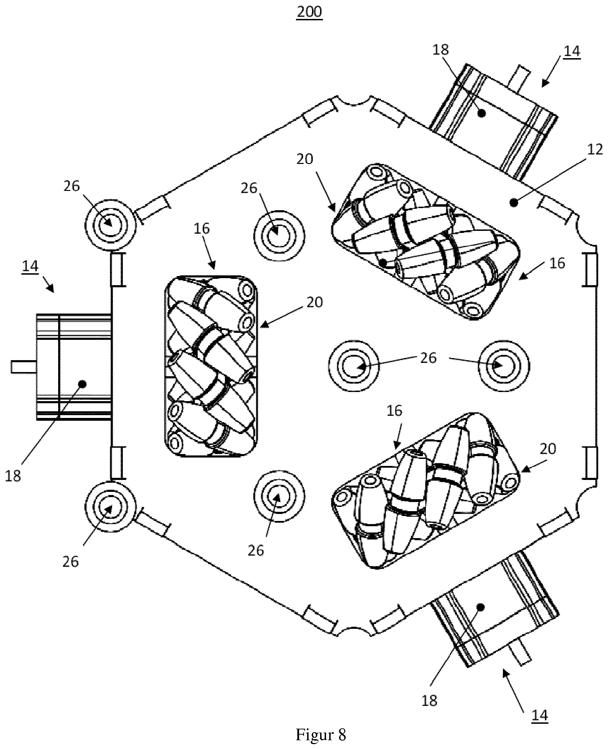

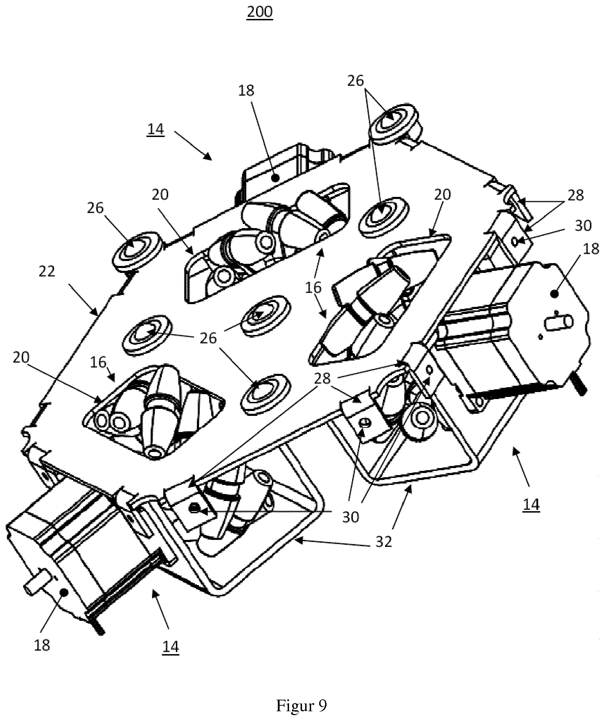

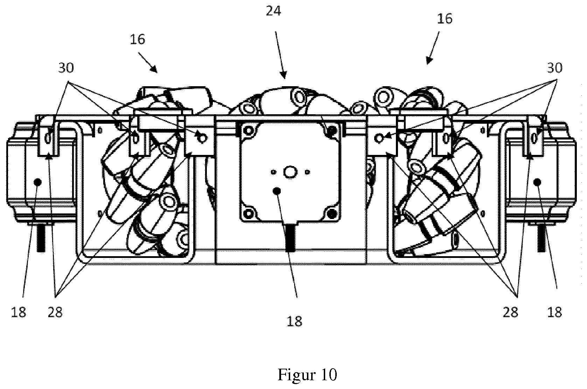

In den Figuren 8 bis 10 ist eine weitere besondere Ausführungsform eines omnidirektionalen Fördersystemmoduls 200 gemäß der vorliegenden Erfindung gezeigt. Diese unterscheidet sich von der in den Figuren 1, 6 und 7 gezeigten Ausführungsform im Wesentlichen in der Art der Förderräder 16 und dadurch bedingt auch in der Gestaltung der Ausschnitte 20. Es handelt sich bei den Förderrädern 16 um ein spezielles Allseitenrad, nämlich ein Mecanum-Rad.

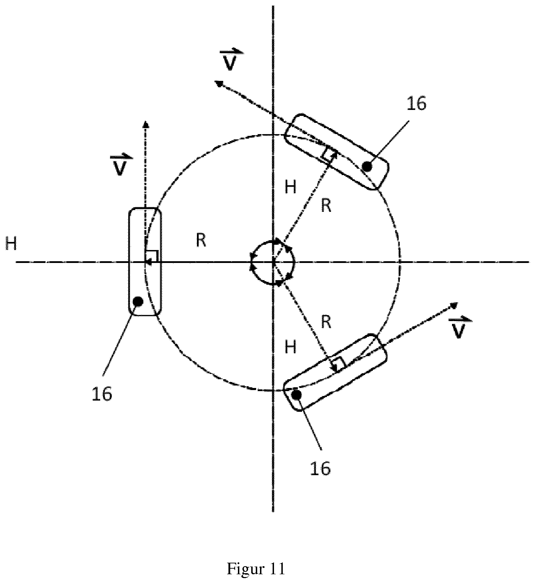

In der Figur 11 sind für das in den Figuren 1, 6 und 7 gezeigte Ausführungsbeispiel die gleichmäßige Anordnung und Orientierung der Förderräder 16 gezeigt. Die Hauptdrehachsen H der Förderräder 16 verlaufen kollinear mit den Radien R, so dass die Geschwindigkeitsvektoren v immer tangential zum "Anordnungskreis" verlaufen. Diese Konfiguration vereinfacht die Mathematik hinter der Steuerung.

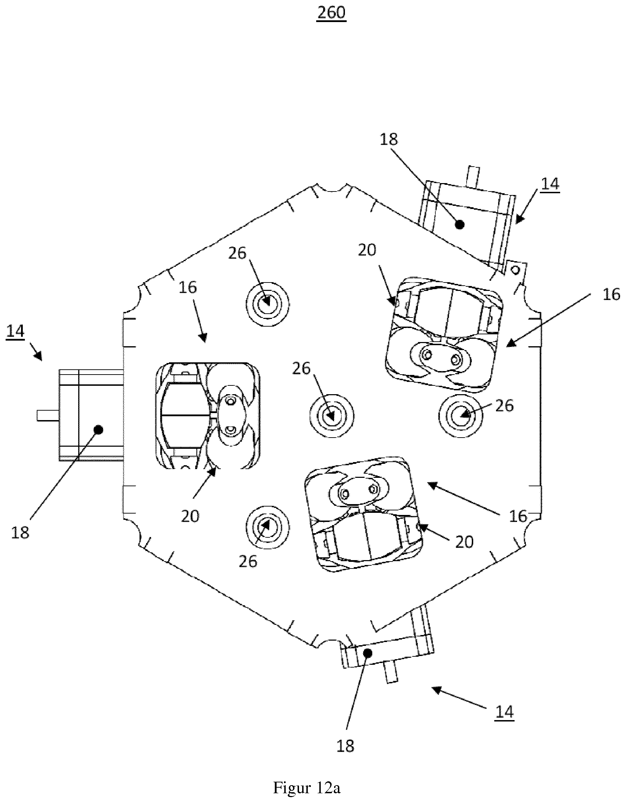

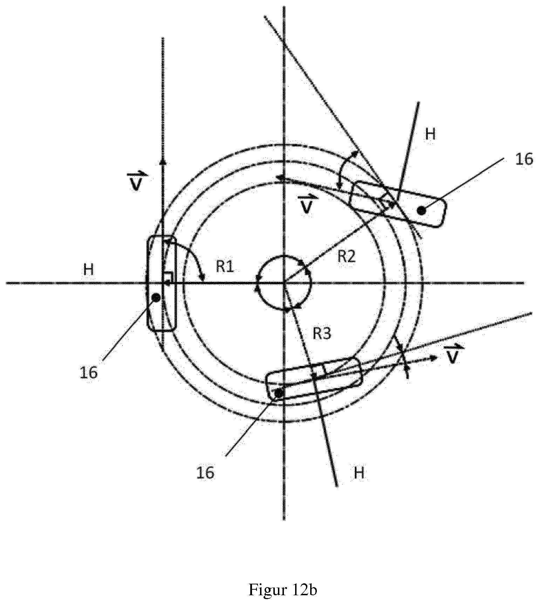

In der Figur 12b ist entsprechendes für eine andere Ausführungsform (mit ungleichmäßiger Anordnung und Orientierung der Förderräder) gezeigt, die in der Figur 12a dargestellt ist. Zwei der Hauptdrehachsen H der Förderräder 14 verlaufen nicht kollinear mit den Radien R. Dementsprechend verlaufen die zugehörigen Geschwindigkeitsvektoren **v̅** auch nicht tangential zum "Anordnungskreis". Alternativ oder zusätzlich können auch die Radien unterschiedlich groß sein. Es gibt dann nicht nur einen Anordnungskreis, sondern mehrere konzentrische Anordnungskreise.

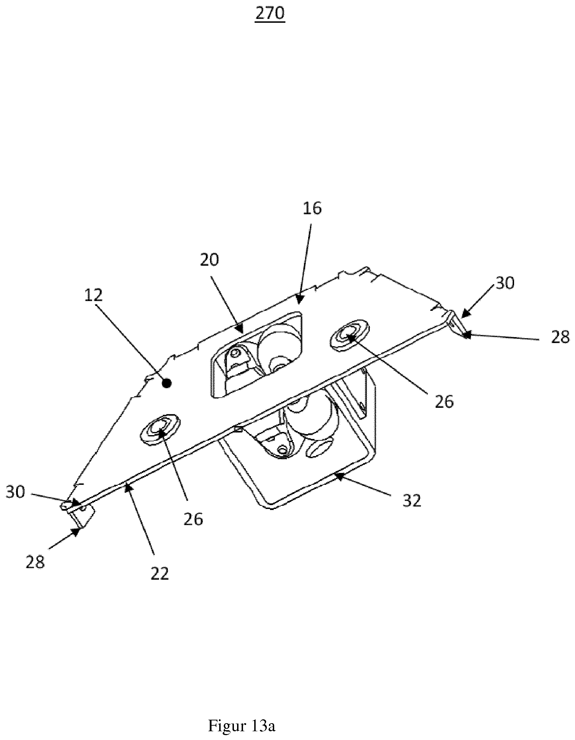

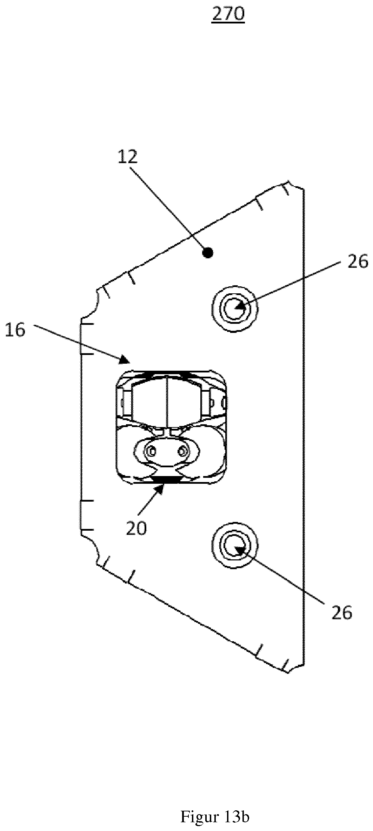

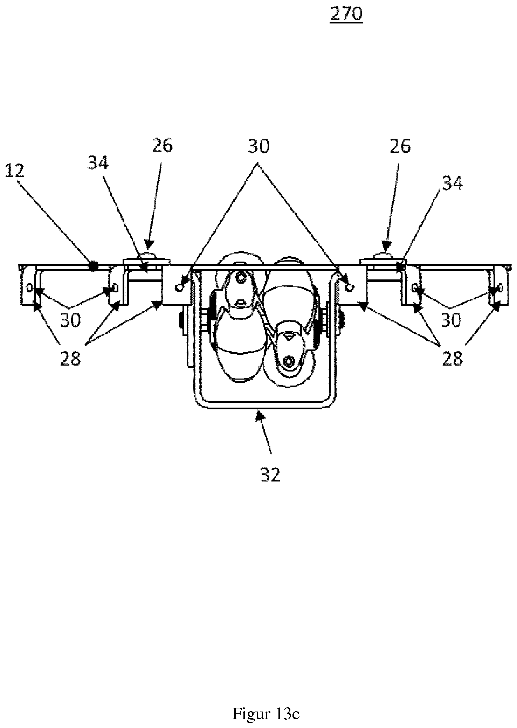

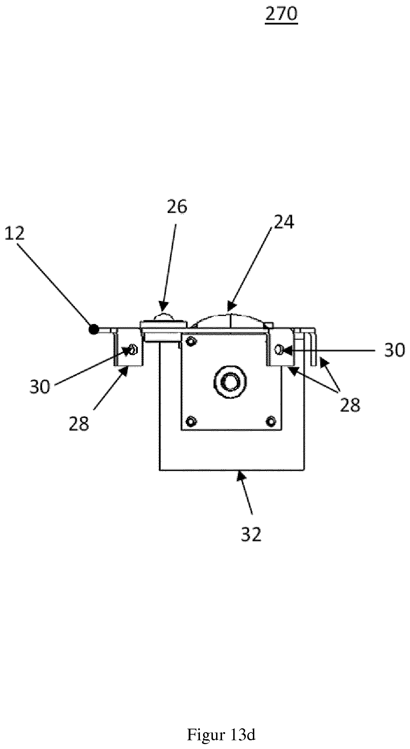

In den Figuren 13a bis 13d ist eine weitere besondere Ausführungsform eines omnidirektionalen Fördersystemmoduls 270 für ein Fördersystem gezeigt. Dies unterscheidet sich von dem vorangehend gezeigten Ausführungsformen darin, dass es keine Antriebsmotoren aufweist. Somit ist es nicht kraftbetrieben bzw. aktiv, sondern passiv. Ansonsten entspricht es im Wesentlichen der in den Figuren 2 bis 5d gezeigten Ausführungsform. Ein derartiges passives Fördersystemmodul ist in erster Linie für Außenbereiche/Außenkanten eines flächigen omnidirektionalen Fördersystems bzw. einer Plattform vorgesehen. Es sorgt dafür, dass das Fördersystem gerade Kanten hat und Objekte, wie zum Beispiel Pakete, stets gestützt werden.

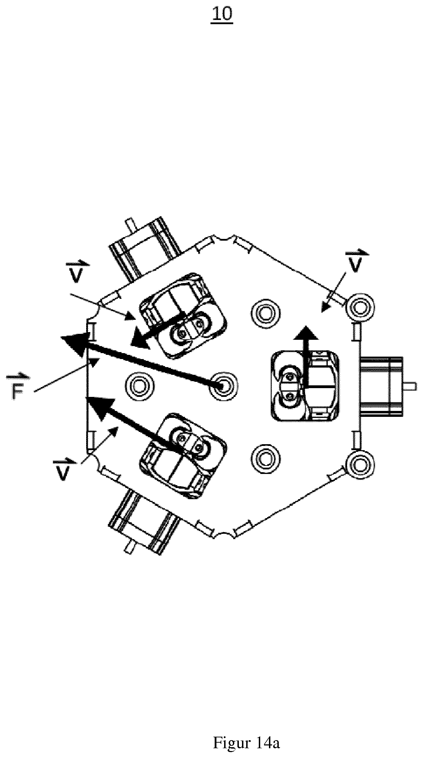

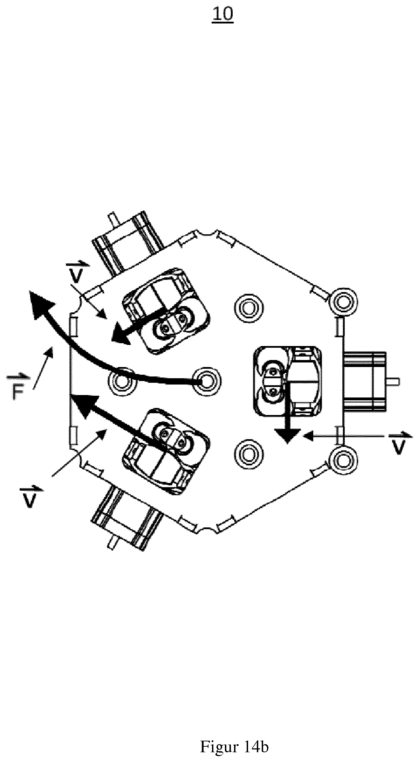

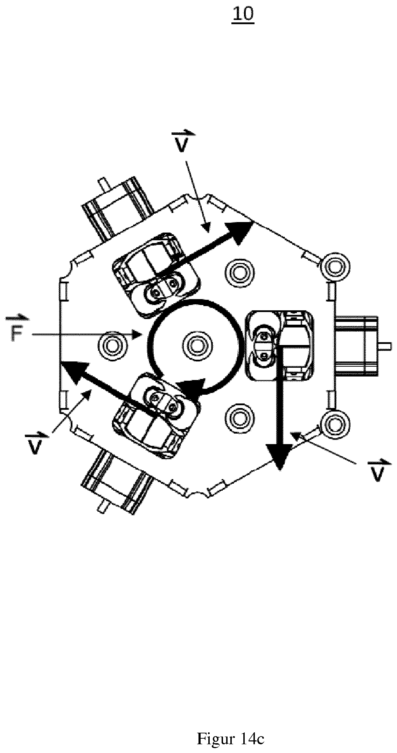

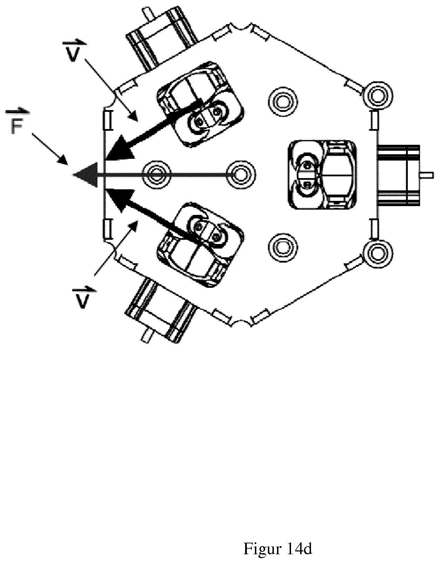

Anhand der Figuren 14a bis 14d soll für das Fördersystemmodul 10 von Figur 1 gezeigt werden, wie sich aus der Kombination von unterschiedlichen Geschwindigkeitsvektoren v̅ (unterschiedliche Richtungen und/oder Beträge) der Antriebsmotoren sich unterschiedliche Förderrichtungen F̅ für ein Objekt ergeben können. Es lassen sich damit sehr komplexe Bewegungsabläufe erzeugen. Diese umfassen geradlinige, krummlinige und Drehbewegungen.

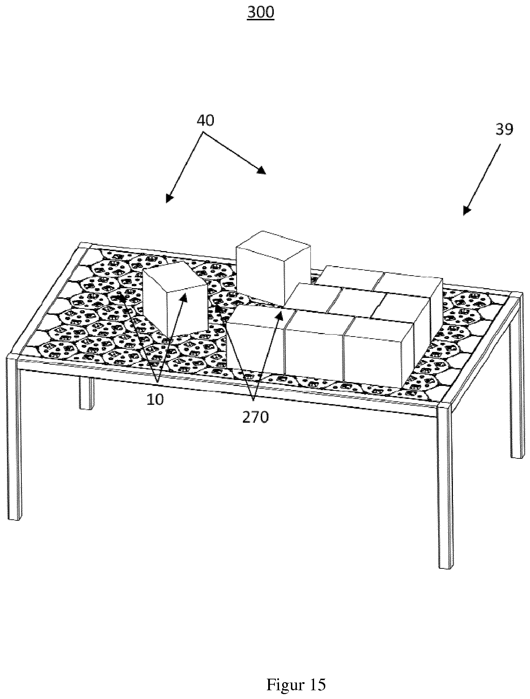

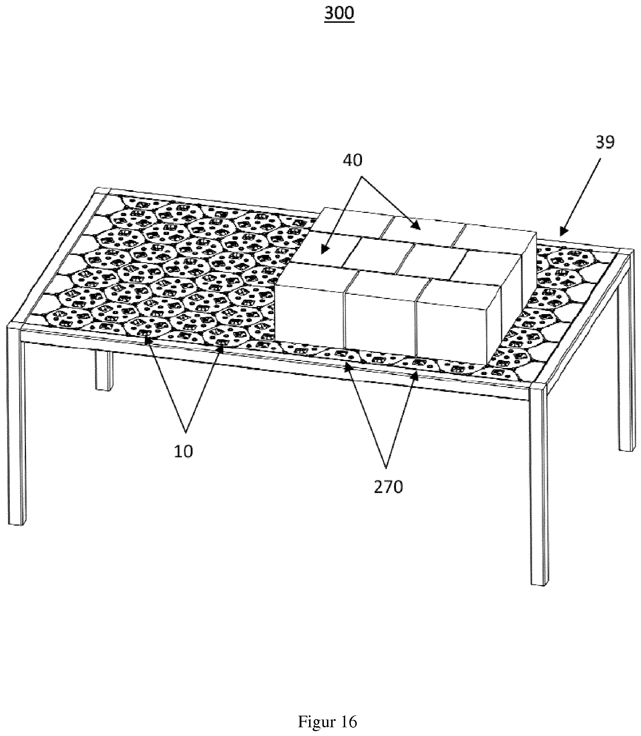

In den Figuren 15 bis 18 ist ein modulares omnidirektionales Fördersystem 300 aus aktiven 10 und passiven 270 Fördersystemmodulen gezeigt, von denen nur einige gekennzeichnet sind. Besagte Fördersystemmodule sind in einem Tischgestell 39 zu einem flächigen Fördersystem 300 bzw. zu einer Plattform zusammengesteckt. Die Fläche bzw. Plattform muss nicht eben sein, sondern kann auch beispielsweise nach oben oder unten gekrümmt sein. Wie sich anhand der Figuren 15 und 16 ergibt, können mittels der omnidirektionalen Fördereinheiten Kartons bzw. Pakete 40 einzeln bewegt und gedreht werden, ohne die Nachbarpakete zu beeinflussen. In der Figur 16 sind die Pakete bereits in einer palettierbaren Lage angeordnet.

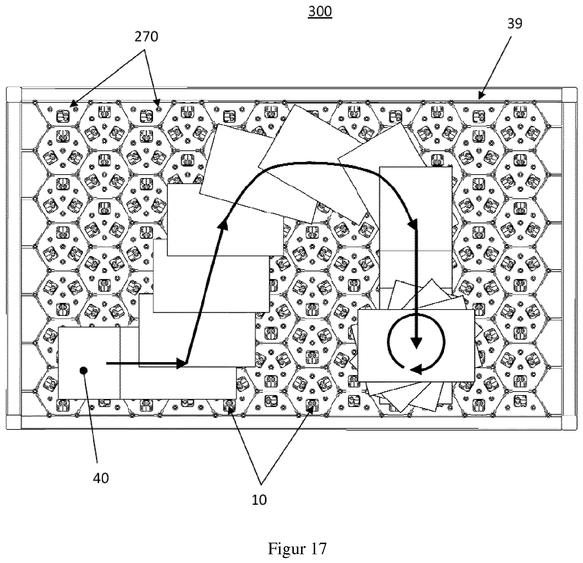

Figur 17 zeigt beispielhaft, wie ein Paket 40 mittels des Fördersystems 300 bewegt werden kann, nämlich gradlinig in Längsrichtung, diagonal, in einer Kurve mit Rotation, geradlinig in Querrichtung und reine Rotation.

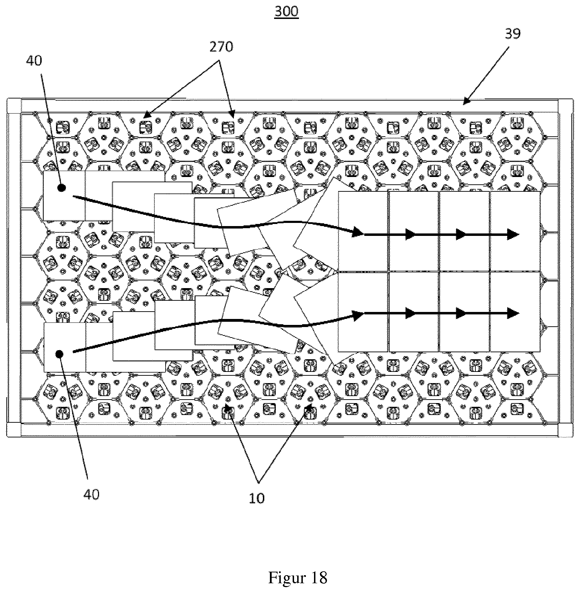

Figur 18 zeigt, wie mit dem Fördersystem 300 eine Lage von Paketen, zum Beispiel für das Palettieren, erzeugt wird. Die Pakete 40 können gleichzeitig bewegt und rotiert werden, und zwar unabhängig voneinander.

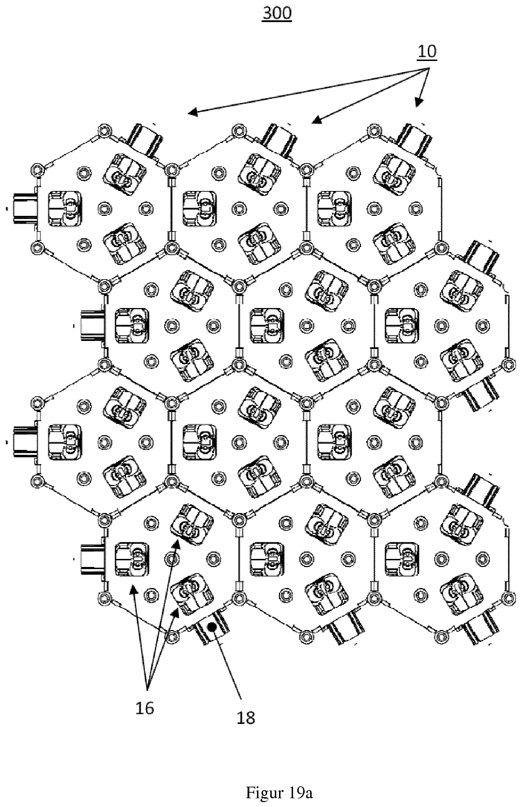

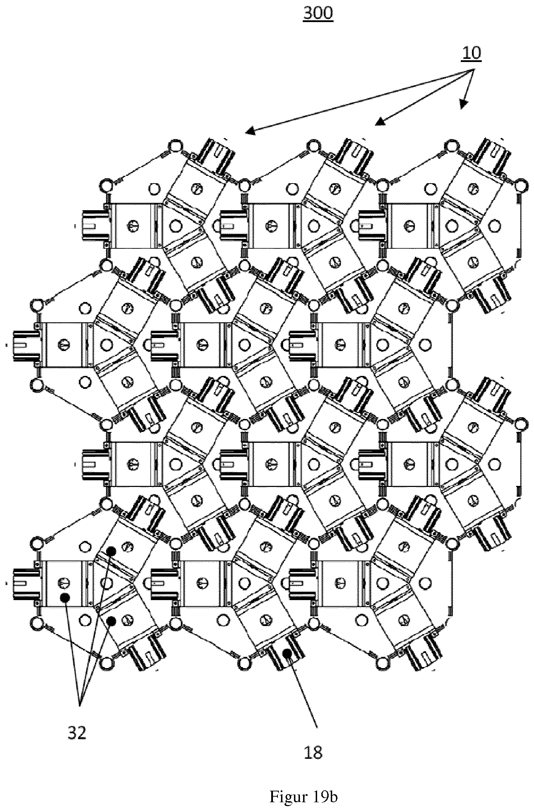

Weiterhin zeigen die Figuren 19a und 19b noch einen vergrößerten Ausschnitt aus dem Fördersystem 300 in Draufsicht und in Ansicht von unten.

Ein Fördersystem im Sinne der vorliegenden Erfindung umfasst mindestens zwei Fördersystemmodule, wobei jedes Fördersystemmodul mindestens zwei Fördereinheiten umfasst. Unter idealen Randbedingungen ist die Unterfläche eines Fördergutes absolut eben und liegen die höchsten Punkte der omnidirektionalen Förderräder der einzelnen Fördereinheiten genau in einer Ebene (Förderebene), sodass alle Förderräder, die sich unter einem Fördergut befinden, mit dem Fördergut tatsächlich in Kontakt stehen.

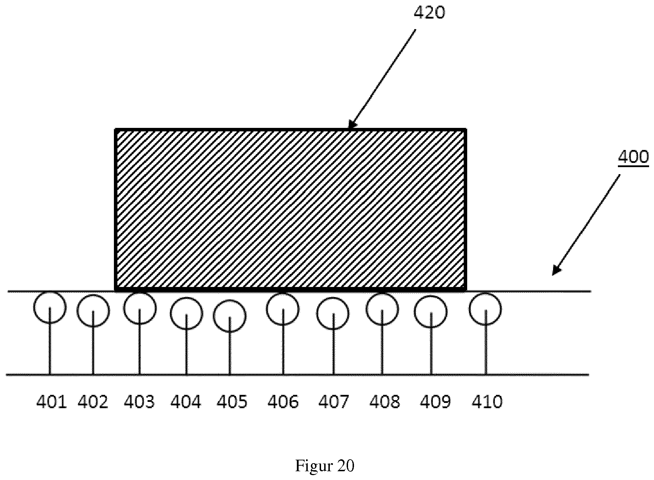

In der Realität sind diese Bedingungen häufig nicht gegeben. Die Unterfläche des Fördergutes ist nicht immer absolut eben und durch beispielsweise mechanische und Fertigungstoleranzen liegen die höchsten Punkte der Förderräder der einzelnen Fördereinheiten nicht genau in einer Ebene. Dies ist in der Figur 20 schematisch dargestellt. Besagte Figur zeigt ein Fördersystem 400 mit Förderrädern 401 bis 410. Auf dem Fördersystem 400 befindet sich ein Paket 420. Geometrisch gesehen reichen die drei höchsten, nicht in einer Linie liegenden Förderräder 403, 406 und 408 aus, um eine Förderebene zu bilden. In einem solchen Fall hätten alle anderen Förderräder keinen Kontakt mit dem Paket 420 und wären somit für ein Fördern des Paket 420 nicht brauchbar. Im ungünstigsten Fall wären diese drei Förderräder 403, 406 und 408 sogar parallel zu einander, sodass eine omnidirektionale Bewegung nicht mehr möglich wäre.

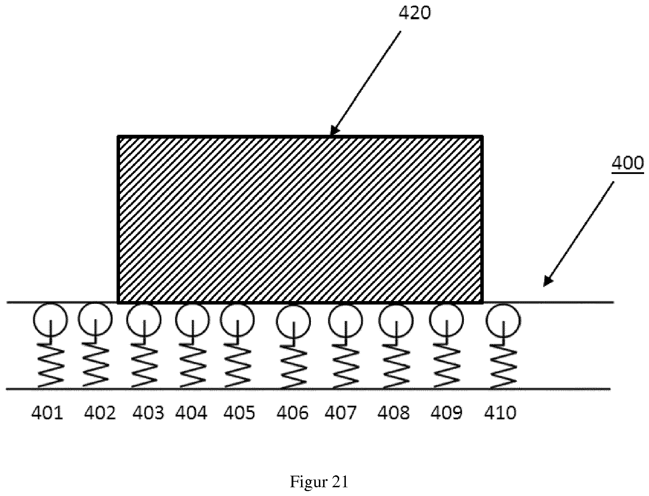

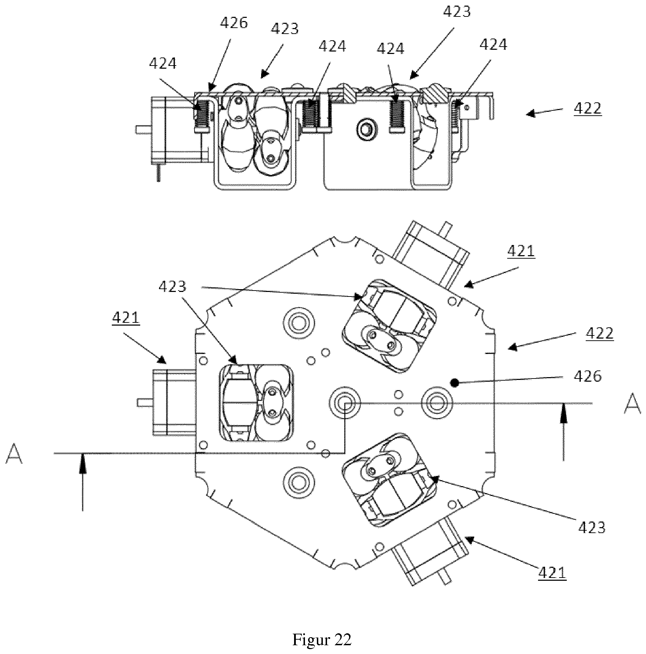

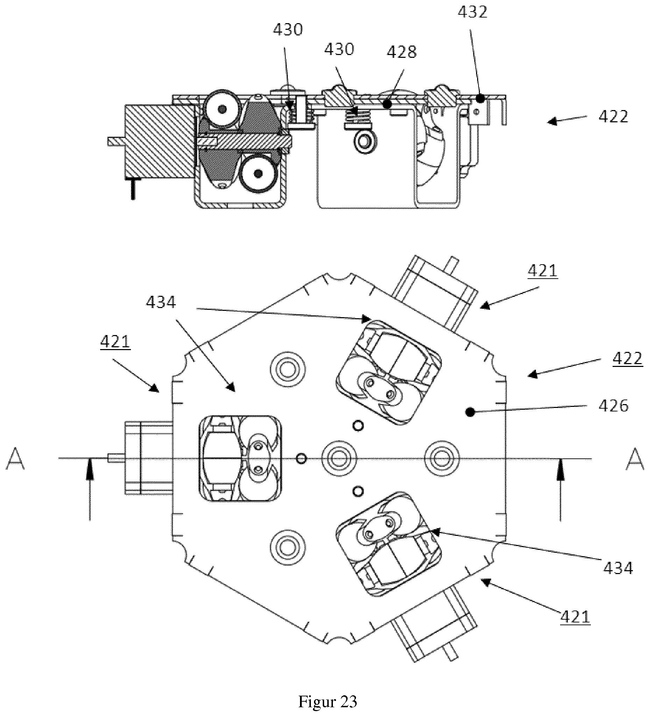

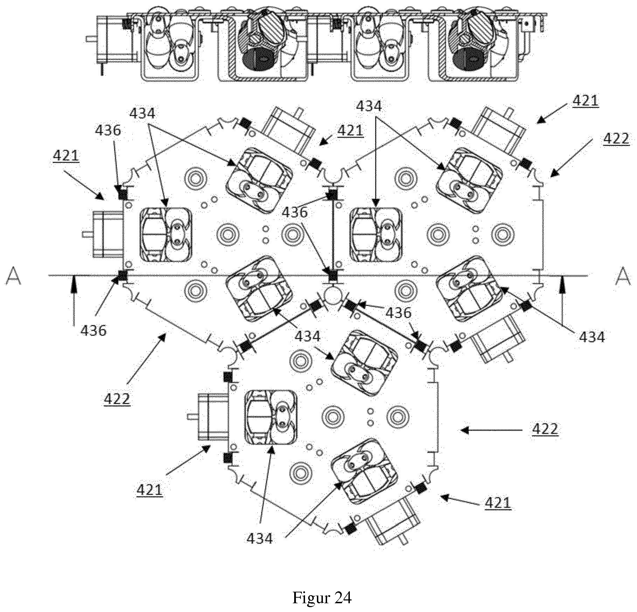

Das vorgenannte Problem kann dadurch gelöst werden, dass ein Kontakt zwischen jedem oder zumindest nahezu jedem jeweils unter dem Paket 420 befindlichen Förderrad und dem Paket 420 sichergestellt wird. Dies ist in Figur 21 gezeigt. In einem derartigen Fall haben alle Förderräder 403 bis 409, zeitlich davor aber auch schon die Förderräder 401 und 402 sowie zeitlich danach dann auch das Förderrad 410, Kontakt mit dem Paket 420. Dies kann durch Federung von Komponenten des Fördersystems realisiert werden und beispielsweise - wie nachfolgend beschrieben - durchgeführt werden:
1. Es erfolgt eine Federung der einzelnen Förderräder (nicht gezeigt). Dies kann beispielsweise auf zwei Wegen realisiert werden. Zum ersten können Förderräder aus einem weichen Material eingesetzt werden. Wenn eine Last, wie zum Beispiel das Paket 420, auf einem derartigen Förderrad liegt, verformt sich das Förderrad geringfügig, sodass der höchste Punkt des Förderrades etwas nach unten geht. Mit dieser Lösung können in erster Linie nur sehr kleine Unebenheiten ausgeglichen werden. Eine Alternative wäre beispielsweise eine federgelagerte Verbindung zwischen einem Förderrad und einer jeweiligen Antriebswelle. Dies kann zum Beispiel über eine Elastomerkupplung (nicht gezeigt) realisiert werden.
2. Es kann eine Federung der Fördereinheiten unabhängig voneinander erfolgen. Ein Beispiel hierfür wird in der Figur 22 gezeigt. Bei dieser in Figur 22 gezeigten Ausführungsform werden die Fördereinheiten 421 eines Fördersystemmoduls 422 durch Federn 424 gelagert auf der Unterseite des Trägerblechs 426 montiert. Diese Federungsart ermöglicht die Anpassung der Höhe der einzelnen Fördereinheiten 421 an das jeweilige Fördergut, wobei nur die Federung derjenigen Fördereinheit beansprucht wird, die unter dem Fördergut steht. Die anderen Fördereinheiten werden dabei nicht beeinflusst.
3. Es erfolgt eine Federung der Fördereinheiten 421 abhängig voneinander (siehe Figur 23). Alle Fördereinheiten 421 werden fest auf einer Zwischenplatte 428 montiert. Diese Zwischenplatte 428 wird nun mittels Federn 430 gelagert auf die Unterseite des Trägerblechs 432 montiert. Wenn ein Fördergut auf einem der omnidirektionalen Förderräder 434 steht, beansprucht es die Federung mit seinem Gewicht. Da alle Fördereinheiten 421 mechanisch verbunden sind, werden alle beeinflusst.
4. Es erfolgt eine Federung der Fördersystemmodule zueinander (siehe Figur 24). Bei dieser Ausführungsform werden die Fördersystemmodule 422 nicht starr, sondern durch eine federnde Verbindung 436, von denen nur einige gekennzeichnet sind, miteinander verbunden. So kann sich die Höhe des ganzen Fördersystemmoduls 422 an die Konturen des Förderguts anpassen.
5. Es kann zum Beispiel die Federkonstante eines Fördersystemmoduls so gewählt werden, dass bei Überschreitung der maximalen Last, die auf ein Förderrad wirkt, das Förderrad unterhalb der Oberfläche des Fördersystemmoduls sinkt. In der Praxis könnte man folgendes erreichen:
   Ein Paket hat ein relatives geringes Gewicht, aber eine relativ große Fläche (Paketboden). So ergibt sich eine geringe Flächenpressung. Bei einem Menschen dagegen ist das Gesamtgewicht auf kleinere Flächen (Fußflächen) verteilt. Es ergibt sich eine hohe Flächenpressung. Die Federkonstante des Fördersystemmoduls kann so gewählt werden, dass, wenn ein Paket auf einem Tisch bzw. einer Plattform liegt, die Förderräder oberhalb der Oberfläche des Fördersystemmoduls bleiben. Wenn ein Mensch auf dem Tisch bzw. der Plattform geht, würden sie unter die Oberfläche des Fördersystemmoduls gedrückt. So könnte ein Mensch auf der Plattform bzw. dem Tisch gehen, wenn gleichzeitig Pakete gefördert werden. Mit entsprechenden Sensoren könnte man erfassen, ob ein Förderrad unter die Oberfläche des Fördersystemmoduls gedrückt wurde. In solch einem Fall würde man das Förderrad deaktivieren. Alle Förderräder, die noch aus der Oberfläche des Fördersystemmoduls vorragen, könnten weiterhin für das Fördern eingesetzt werden.

Es ist auch eine aktive Absenkung z. B. der Förderräder - einzeln oder gruppenweise bzw. insgesamt - denkbar. Durch die aktive Absenkung soll ein ähnlicher Effekt wie mit einer Federung erreicht werden. In diesem Fall werden die passiven Federn durch z. B. aktive Zylinder oder Spindeln ersetzt, die die Förderräder unterhalb der Oberfläche eines Fördersystemmoduls bzw. der Fördersystemmodule absenken. Die Absenkung kann wie die Federung auf unterschiedliche Arten realisiert werden. Absenkung einer einzelnen Fördereinheit, gleichzeitige Absenkung aller Fördereinheiten eines Fördersystemmoduls oder Absenkung aller Fördersystemmodule in einem Fördersystem. Eine aktive Absenkung könnte bei den in den Figuren 22 und 23 gezeigten Ausführungsformen beispielsweise dadurch erreicht werden, dass die Federn 424 und 430 durch Liniearaktuatoren, wie zum Beispiel Solenoide, Spindeln oder Zylinder, ersetzt werden oder aber die Federn 424 und 430 mit derartigen Liniearaktuatoren kombiniert werden.

Auch wenn dies in der gesamten Beschreibung der Figuren nicht erwähnt wurde, so weist das omnidirektionale Fördersystem auch eine Steuereinrichtung (nicht gezeigt) auf, die mit den Antriebsmotoren zum individuellen Ansteuern derselben verbunden ist.

### Bezugszeichenliste

- 10: Fördersystemmodul
- 12: Trägerblech
- 14: Fördereinheiten
- 16: Förderräder
- 18: Antriebsmotoren
- 20: Ausschnitte
- 22: Unterseite
- 24: höchste Punkte
- 26: Kugelrollen
- 28: Abkantungen
- 30: Bohrungen
- 31: Rollen
- 32: Träger
- 34: Abkantungen
- 36: Bohrungen
- 38: Aussparungen
- 39: Tischgestell
- 40: Pakete
- 200: Fördersystemmodul
- 260: Fördersystemmodul
- 270: Fördersystemmodul
- 300: Fördersystem
- 400: Fördersystem
- 401-410: Förderräder
- 420: Paket
- 421: Fördereinheiten
- 422: Fördersystemmodule
- 423: Förderräder
- 424: Federn
- 426: Trägerblech
- 428: Zwischenplatte
- 430: Federn
- 432: Trägerblech
- 434: Förderräder
- 436: federnde Verbindungen
- a, b, c: Seiten eines Dreiecks
- D: gleichseitiges Dreieck
- s, t, r: Mittelsenkrechten
- H: Hauptdrehachsen
- M: Mittelpunkt
- R: Radien
- γ: Winkel
- v̅: Geschwindigkeitsvektoren
- F̅: Förderrichtungen

## Patentansprüche

1. Omnidirektionales Fördersystemmodul (10, 200, 260), umfassend mindestens zwei nebeneinander angeordnete omnidirektionale Fördereinheiten (14, 14), wobei die Fördereinheiten jeweils mindestens ein omnidirektionales Förderrad (16) aufweisen und wobei die Wirkrichtungen der Förderräder der Fördereinheiten unter einem Winkel ungleich Null zueinander verlaufen, **dadurch gekennzeichnet, dass** die Fördereinheiten einen einzeln zugeordneten Antriebsmotor (18) zum individuellen Antreiben des mindestens einen Förderrades (16) umfassen.

2. Omnidirektionales Fördersystemmodul (10, 200, 260) nach Anspruch 1, **dadurch gekennzeichnet, dass** genau drei omnidirektionale Fördereinheiten (14, 14, 14) nebeneinander vorgesehen und die Wirkrichtungen der Förderräder der drei Fördereinheiten so zueinander verlaufen, dass keine parallelen Wirkrichtungen vorliegen.

3. Omnidirektionales Fördersystemmodul (10, 200, 260) nach Anspruch 1 oder 2, **dadurch gekennzeichnet, dass** die Wirkrichtungen der Förderräder nicht orthogonal zueinander verlaufen.

4. Omnidirektionales Fördersystemmodul (10, 200) nach Anspruch 3, **dadurch gekennzeichnet, dass** die Förderräder (16, 16, 16) in den Seitenmitten eines gleichseitigen Dreiecks (D) angeordnet sind.

5. Omnidirektionales Fördersystemmodul (10, 200) nach Anspruch 4, **dadurch gekennzeichnet, dass** die Wirkrichtungen der Förderräder unter einem Winkel von 90° zu den Seiten des Dreiecks verlaufen oder mindestens eine der Wirkrichtungen der Förderräder unter einem Winkel ungleich 0° zur zugehörigen Seite des Dreiecks verläuft.

6. Omnidirektionales Fördersystemmodul (10, 200, 260) nach einem der vorangehenden Ansprüche, **dadurch gekennzeichnet, dass** jedes omnidirektionale Förderrad (16) aus einem Einzel-Allseitenrad oder einem Mehrfach-Allseitenrad, insbesondere Doppel-Allseitenrad, besteht, insbesondere wobei das Allseitenrad ein Mecanum-Rad ist.

7. Omnidirektionales Fördersystemmodul (10, 200, 260) nach einem der vorangehenden Ansprüche, **dadurch gekennzeichnet, dass** es ein Trägerblech (12) umfasst, an dessen Unterseite (22) die omnidirektionalen Fördereinheiten (14) so gelagert sind, dass das Förderrad (16) bzw. die Förderräder (16) durch einen bzw. einen jeweiligen Ausschnitt im Trägerblech nach oben vorragt/vorragen, insbesondere wobei es mindestens eine in dem Trägerblech (12) gelagerte Kugelrolle (26) und vorzugsweise mehrere vorzugsweise gleichmäßig verteilte derartige Kugelrollen umfasst.

8. Omnidirektionales Fördersystemmodul nach einem der vorangehenden Ansprüche, **dadurch gekennzeichnet, dass** es steckbar ist.

9. Omnidirektionales Fördersystemmodul nach einem der vorangehenden Ansprüche, **dadurch gekennzeichnet, dass** mindestens eines der Förderräder (401-410) einzeln federnd gelagert ist.

10. Omnidirektionales Fördersystemmodul nach einem der Ansprüche 1 bis 8, **dadurch gekennzeichnet, dass** mindestens eine (421) der Fördereinheiten einzeln federnd gelagert ist.

11. Omnidirektionales Fördersystemmodul nach einem der Ansprüche 1 bis 8, **dadurch gekennzeichnet, dass** die zweite Fördereinheit oder mindestens zwei (421, 421) der Fördereinheiten abhängig voneinander federnd gelagert sind.

12. Modulares omnidirektionales Fördersystem, umfassend eine Vielzahl von nebeneinander angeordneten omnidirektionalen Fördersystemmodulen nach einem der Ansprüche 1 bis 11 und eine Steuereinrichtung, die mit den Antriebsmotoren zum individuellen Ansteuern derselben verbunden ist.

13. Modulares omnidirektionales Fördersystem, umfassend eine Vielzahl von nebeneinander angeordneten omnidirektionalen Fördersystemmodulen, wobei jedes Fördersystemmodul eine omnidirektionale Fördereinheit (14) aus mindestens einem omnidirektionalen Förderrad (16) und aus einem einzeln zugeordneten Antriebsmotor (18) zum individuellen Antreiben des mindestens einen Förderrades (16) umfasst und die Fördersystemmodule in Zweiergruppen so angeordnet sind, dass die Wirkrichtungen der Förderräder der jeweiligen beiden Fördereinheiten unter einem Winkel ungleich Null zueinander verlaufen, und eine Steuereinrichtung, die mit den Antriebsmotoren zum individuellen Ansteuern derselben verbunden ist.

14. Modulares omnidirektionales Fördersystem, umfassend eine Vielzahl von nebeneinander angeordneten omnidirektionalen Fördersystemmodulen, wobei jedes Fördersystemmodul eine omnidirektionale Fördereinheit (14) aus mindestens einem omnidirektionalen Förderrad (16) und aus einem einzeln zugeordneten Antriebsmotor (18) zum individuellen Antreiben des mindestens einen Förderrades (16) umfasst und die Fördersystemmodule in Dreiergruppen so angeordnet sind, dass die Wirkrichtungen der Förderräder der jeweiligen drei Fördereinheiten so zueinander verlaufen, dass keine parallelen Wirkrichtungen vorliegen, und eine Steuereinrichtung, die mit den Antriebsmotoren zum individuellen Ansteuern derselben verbunden ist.

15. Modulares omnidirektionales Fördersystem nach Anspruch 13 oder 14, **dadurch gekennzeichnet, dass** die Wirkrichtungen der Förderräder der Zweier- oder Dreiergruppen nicht orthogonal zueinander verlaufen.

16. Modulares omnidirektionales Fördersystem (300) nach einem der Ansprüche 12 bis 15, **dadurch gekennzeichnet, dass** es mindestens ein passives omnidirektionales Fördersystemmodul (270) umfasst, das mindestens ein nicht von einem Antriebsmotor angetriebenes omnidirektionales Förderrad (16) aufweist, insbesondere wobei das mindestens eine passive Fördersystemmodul (270) mindestens eine Kugelrolle (26) aufweist.

17. Omnidirektionales Fördersystem, umfassend eine Vielzahl von nebeneinander angeordneten omnidirektionalen Fördereinheiten, wobei die Fördereinheiten jeweils mindestens ein omnidirektionales Förderrad und mindestens einen einzeln zugeordneten Antriebsmotor umfassen, wobei die Fördereinheiten in Zweiergruppen so angeordnet sind, dass die Wirkrichtungen der Förderräder der jeweiligen beiden Fördereinheiten unter einem Winkel ungleich Null zueinander verlaufen, und eine Steuereinrichtung, die mit den Antriebsmotoren zum individuellen Ansteuern derselben verbunden ist.

18. Omnidirektionales Fördersystem, umfassend eine Vielzahl von nebeneinander angeordneten omnidirektionalen Fördereinheiten, wobei die Fördereinheiten jeweils mindestens einen omnidirektionalen Förderrad und mindestens einen einzeln zugeordneten Antriebsmotor umfassen, wobei die Fördereinheiten in Dreiergruppen so angeordnet sind, dass die Wirkrichtungen der Förderräder der jeweiligen drei Fördereinheiten so zueinander verlaufen, dass keine parallelen Wirkrichtungen vorliegen, und eine Steuereinrichtung, die mit den Antriebsmotoren zum individuellen Ansteuern derselben verbunden ist.

19. Omnidirektionales Fördersystem nach Anspruch 17 oder 18, **dadurch gekennzeichnet, dass** die Wirkrichtungen der Förderräder nicht orthogonal zueinander verlaufen.

20. Omnidirektionales Fördersystem nach einem der Ansprüche 13 bis 19, **dadurch gekennzeichnet, dass** mindestens eines der Förderräder einzeln federnd gelagert ist.

21. Omnidirektionales Fördersystem nach einem der Ansprüche 13 bis 19, **dadurch gekennzeichnet, dass** mindestens eine der Fördereinheiten einzeln federnd gelagert ist.

22. Omnidirektionales Fördersystem nach einem der Ansprüche 13 bis 19, **dadurch gekennzeichnet, dass** die zwei Fördereinheiten oder mindestens zwei der Fördereinheiten abhängig voneinander federnd gelagert sind.

23. Omnidirektionales Fördersystem nach einem der Ansprüche 13 bis 19, **dadurch gekennzeichnet, dass** mindestens (422, 422, 422) drei der Fördersystemmodule miteinander federnd verbunden sind.

## Claims

1. Omnidirectional conveying-system module (10, 200, 260) comprising at least two omnidirectional conveying units (14, 14) arranged one beside the other, wherein the conveying units each have at least one omnidirectional conveying wheel (16), and wherein the operating directions of the conveying wheels of the conveying units run at an angle other than zero in relation to one another, **characterized in that** the conveying units comprise an individually assigned drive motor (18) for individually driving the at least one conveying wheel (16).

2. Omnidirectional conveying-system module (10, 200, 260) according to Claim 1, **characterized in that** precisely three omnidirectional conveying units (14, 14, 14) are provided one beside the other and the operating directions of the conveying wheels of the three conveying units run in relation to one another such that there are no parallel operating directions present.

3. Omnidirectional conveying-system module (10, 200, 260) according to Claim 1 or 2, **characterized in that** the operating directions of the conveying wheels do not run orthogonally in relation to one another.

4. Omnidirectional conveying-system module (10, 200) according to Claim 3, **characterized in that** the conveying wheels (16, 16, 16) are arranged in the centres of the sides of an equilateral triangle (D).

5. Omnidirectional conveying-system module (10, 200) according to Claim 4, **characterized in that** the operating directions of the conveying wheels run at an angle of 90° in relation to the sides of the triangle or at least one of the operating directions of the conveying wheels runs at an angle other than 0° in relation to the associated side of the triangle.

6. Omnidirectional conveying-system module (10, 200, 260) according to one of the preceding claims, **characterized in that** each omnidirectional conveying wheel (16) comprises a single omni wheel or a multiple omni wheel, in particular a double omni wheel, in particular wherein the omni wheel is a Mecanum wheel.

7. Omnidirectional conveying-system module (10, 200, 260) according to one of the preceding claims, **characterized in that** it comprises a metal carrier panel (12), on the underside (22) of which the omnidirectional conveying units (14) are mounted such that the conveying wheel (16) or the conveying wheels (16) project/projects upwards through a or a respective cutout in the metal carrier panel, in particular wherein it comprises at least one ball roller (26) mounted in the metal carrier panel (12) and preferably a plurality of such ball rollers, distributed preferably uniformly.

8. Omnidirectional conveying-system module according to one of the preceding claims, **characterized in that** it is capable of plug fitting.

9. Omnidirectional conveying-system module according to one of the preceding claims, **characterized in that** at least one of the conveying wheels (401-410) is mounted in a resilient manner in its own right.

10. Omnidirectional conveying-system module according to one of Claims 1 to 8, **characterized in that** at least one (421) of the conveying units is mounted in a resilient manner in its own right.

11. Omnidirectional conveying-system module according to one of Claims 1 to 8, **characterized in that** the second conveying unit or at least two (421, 421) of the conveying units are mounted in a resilient manner in dependence on one another.

12. Modular omnidirectional conveying system comprising a multiplicity of omnidirectional conveying-system modules according to one of Claims 1 to 11 arranged one beside the other, and also comprising a control device, which is connected to the drive motors for individual activation of the same.

13. Modular omnidirectional conveying system comprising a multiplicity of omnidirectional conveying-system modules arranged one beside the other, wherein each conveying-system module comprises an omnidirectional conveying unit (14) made up of at least one omnidirectional conveying wheel (16) and of an individually assigned drive motor (18) for individually driving the at least one conveying wheel (16), and the conveying-system modules are arranged in groups of two such that the operating directions of the conveying wheels of the two respective conveying units run at an angle other than zero in relation to one another, and also comprising a control device, which is connected to the drive motors for individual activation of the same.

14. Modular omnidirectional conveying system comprising a multiplicity of omnidirectional conveying-system modules arranged one beside the other, wherein each conveying-system module comprises an omnidirectional conveying unit (14) made up of at least one omnidirectional conveying wheel (16) and of an individually assigned drive motor (18) for individually driving the at least one conveying wheel (16), and the conveying-system modules are arranged in groups of three such that the operating directions of the conveying wheels of the three respective conveying units run in relation to one another such that there are no parallel operating directions present, and also comprising a control device, which is connected to the drive motors for individual activation of the same.

15. Modular omnidirectional conveying system according to Claim 13 or 14, **characterized in that** the operating directions of the conveying wheels of the groups of two or three do not run orthogonally in relation to one another.

16. Modular omnidirectional conveying system (300) according to one of Claims 12 to 15, **characterized in that** it comprises at least one passive omnidirectional conveying-system module (270), which has at least one omnidirectional conveying wheel (16) not driven by a drive motor, in particular wherein the at least one passive conveying-system module (270) has at least one ball roller (26).

17. Omnidirectional conveying system comprising a multiplicity of omnidirectional conveying units arranged one beside the other, wherein the conveying units each comprise at least one omnidirectional conveying wheel and at least one individually assigned drive motor, wherein the conveying units are arranged in groups of two such that the operating directions of the conveying wheels of the two respective conveying units run at an angle other than zero in relation to one another, and also comprising a control device, which is connected to the drive motors for individual activation of the same.

18. Omnidirectional conveying system comprising a multiplicity of omnidirectional conveying units arranged one beside the other, wherein the conveying units each comprise at least one omnidirectional conveying wheel and at least one individually assigned drive motor, wherein the conveying units are arranged in groups of three such that the operating directions of the conveying wheels of the three respective conveying units run in relation to one another such that there are no parallel operating directions present, and also comprising a control device, which is connected to the drive motors for individual activation of the same.

19. Omnidirectional conveying system according to Claim 17 or 18, **characterized in that** the operating directions of the conveying wheels do not run orthogonally in relation to one another.

20. Omnidirectional conveying system according to one of Claims 13 to 19, **characterized in that** at least one of the conveying wheels is mounted in a resilient manner in its own right.

21. Omnidirectional conveying system according to one of Claims 13 to 19, **characterized in that** at least one of the conveying units is mounted in a resilient manner in its own right.

22. Omnidirectional conveying system according to one of Claims 13 to 19, **characterized in that** the two conveying units or at least two of the conveying units are mounted in a resilient manner in dependence on one another.

23. Omnidirectional conveying system according to one of Claims 13 to 19, **characterized in that** at least (422, 422, 422) three of the conveying-system modules are connected resiliently to one another.

## Revendications

1. Module de système de transport omnidirectionnel (10, 200, 260), comprenant au moins deux unités de transport omnidirectionnelles (14, 14) disposées l'une à côté de l'autre, les unités de transport présentant chacune au moins une roue de transport omnidirectionnelle (16) et les directions d'action des roues de transport des unités de transport s'étendant suivant un angle différent de zéro les unes par rapport aux autres, **caractérisé en ce que** les unités de transport comprennent un moteur d'entraînement associé individuellement (18) pour l'entraînement individuel de l'au moins une roue de transport (16).

2. Module de système de transport omnidirectionnel (10, 200, 260) selon la revendication 1, **caractérisé en ce qu'**exactement trois unités de transport omnidirectionnelles (14, 14, 14) sont prévues les unes à côté des autres et les directions d'action des roues de transport des trois unités de transport s'étendent les unes par rapport aux autres de telle sorte qu'il n'existe pas de directions d'actions parallèles.

3. Module de système de transport omnidirectionnel (10, 200, 260) selon la revendication 1 ou 2, **caractérisé en ce que** les directions d'actions des roues de transport ne s'étendent pas perpendiculairement les unes par rapport aux autres.

4. Module de système de transport omnidirectionnel (10, 200) selon la revendication 3, **caractérisé en ce que** les roues de transport (16, 16, 16) sont disposées au centre des faces d'un triangle équilatéral (D).

5. Module de système de transport omnidirectionnel (10, 200) selon la revendication 4, **caractérisé en ce que** les directions d'action des roues de transport s'étendent suivant un angle de 90° par rapport aux faces du triangle ou au moins l'une des directions d'action des roues de transport s'étend suivant un angle différent de 0° par rapport à la face associée du triangle.

6. Module de système de transport omnidirectionnel (10, 200, 260) selon l'une quelconque des revendications précédentes, **caractérisé en ce que** chaque roue de transport omnidirectionnelle (16) se compose d'une roue omnidirectionnelle individuelle ou d'une roue omnidirectionnelle multiple, en particulier d'une roue omnidirectionnelle double, en particulier la roue omnidirectionnelle étant une roue Mecanum.

7. Module de système de transport omnidirectionnel (10, 200, 260) selon l'une quelconque des revendications précédentes, **caractérisé en ce qu'**il comprend une tôle de support (12) sur le côté inférieur (22) de laquelle sont supportées les unités de transport omnidirectionnelles (14) de telle sorte que la roue de transport (16) ou les roues de transport (16) fasse(nt) saillie vers le haut à travers une section ou une section respective dans la tôle de support, en particulier en ce qu'il comprend au moins une roulette à bille (26) supportée dans la tôle de support (12) et de préférence plusieurs telles roulettes à bille réparties uniformément.

8. Module de système de transport omnidirectionnel selon l'une quelconque des revendications précédentes, **caractérisé en ce qu'**il est enfichable.

9. Module de système de transport omnidirectionnel selon l'une quelconque des revendications précédentes, **caractérisé en ce qu'**au moins l'une des roues de transport (401-410) est supportée sur ressort individuellement.

10. Module de système de transport omnidirectionnel selon l'une quelconque des revendications 1 à 8, **caractérisé en ce qu'**au moins l'une (421) des unités de transport est supportée sur ressort individuellement.

11. Module de système de transport omnidirectionnel selon l'une quelconque des revendications 1 à 8, **caractérisé en ce que** la deuxième unité de transport ou au moins deux (421, 421) des unités de transport sont supportées sur ressort indépendamment l'une de l'autre.

12. Module de système de transport omnidirectionnel comprenant une pluralité de modules de systèmes de transport unidirectionnels disposés les uns à côté des autres selon l'une quelconque des revendications 1 à 11 et un dispositif de commande qui est connecté aux moteurs d'entraînement en vue de la commande individuelle de ceux-ci.

13. Module de système de transport omnidirectionnel comprenant une pluralité de modules de systèmes de transport unidirectionnels disposés les uns à côté des autres, chaque module de système de transport comprenant une unité de transport omnidirectionnelle (14) constituée d'au moins une roue de transport omnidirectionnelle (16) et d'un moteur d'entraînement associé individuellement (18) pour l'entraînement individuel de l'au moins une roue de transport (16) et les modules de système de transport étant disposés en groupe de deux de telle sorte que les directions d'action des roues de transport des deux unités de transport respectives s'étendent suivant un angle différent de zéro l'une par rapport à l'autre et un dispositif de commande qui est connecté aux moteurs d'entraînement en vue de leur commande individuelle.

14. Module de système de transport omnidirectionnel comprenant une pluralité de modules de systèmes de transport omnidirectionnels disposés les uns à côté des autres, chaque module de système de transport comprenant une unité de transport omnidirectionnelle (14) constituée d'au moins une roue de transport omnidirectionnelle (16) et d'un moteur d'entraînement associé individuellement (18) pour l'entraînement individuel de l'au moins une roue de transport (16) et les modules de systèmes de transport étant disposés en groupes de trois de telle sorte que les directions d'action des roues de transport des trois unités de transport respectives s'étendent les unes par rapport aux autres de telle sorte qu'il n'y ait pas de directions d'action parallèles, et un dispositif de commande qui est connecté aux moteurs d'entraînement en vue de leur commande individuelle.

15. Module de système de transport omnidirectionnel selon la revendication 13 ou 14, **caractérisé en ce que** les directions d'action des roues de transport des groupes de deux ou des groupes de trois ne s'étendent pas perpendiculairement les unes aux autres.

16. Module de système de transport omnidirectionnel (300) selon l'une quelconque des revendications 12 à 15, **caractérisé en ce qu'**il comprend au moins un module de système de transport omnidirectionnel passif (270) qui présente au moins une roue de transport omnidirectionnelle (16) non entraînée par un moteur d'entraînement, en particulier l'au moins un module de système de transport passif (270) présentant au moins une roulette à bille (26).

17. Système de transport omnidirectionnel, comprenant une pluralité d'unités de transport omnidirectionnelles disposées les unes à côté des autres, les unités de transport comprenant à chaque fois au moins une roue de transport omnidirectionnelle et au moins un moteur d'entraînement associé individuellement, les unités de transport étant disposées en groupes de deux de telle sorte que les directions d'action des roues de transport des deux unités de transport respectives s'étendent suivant un angle différent de zéro l'une par rapport à l'autre et un dispositif de commande qui est connecté aux moteurs d'entraînement en vue de leur commande individuelle.

18. Système de transport omnidirectionnel, comprenant une pluralité d'unités de transport omnidirectionnelles disposées les unes à côté des autres, des unités de transport comprenant à chaque fois au moins une roue de transport omnidirectionnelle et au moins un moteur d'entraînement associé individuellement, les unités de transport étant disposées en groupes de trois de telle sorte que les directions d'action des roues de transport des trois unités de transport respectives s'étendent les unes par rapport aux autres de telle sorte qu'il n'y ait pas de directions d'action parallèles, et un dispositif de commande qui est connecté aux moteurs d'entraînement en vue de leur commande individuelle.

19. Système de transport omnidirectionnel selon la revendication 17 ou 18, **caractérisé en ce que** les directions d'action des roues de transport ne s'étendent pas perpendiculairement les unes aux autres.

20. Système de transport omnidirectionnel selon l'une quelconque des revendications 13 à 19, **caractérisé en ce qu'**au moins l'une des roues de transport est supportée sur ressort individuellement.

21. Système de transport omnidirectionnel selon l'une quelconque des revendications 13 à 19, **caractérisé en ce qu'**au moins l'une des unités de transport est supportée sur ressort individuellement.

22. Système de transport omnidirectionnel selon l'une quelconque des revendications 13 à 19, **caractérisé en ce que** les deux unités de transport ou au moins deux des unités de transport sont supportées sur ressort indépendamment l'une de l'autre.

23. Système de transport omnidirectionnel selon l'une quelconque des revendications 13 à 19, **caractérisé en ce qu'**au moins trois (422, 422, 422) des modules de systèmes de transport sont connectés sur ressort les uns aux autres.
